# DEMANDE DE BREVET EUROPEEN

(11) **EP 1 596 112 A1**
(43) Date de publication de la demande: **16.11.2005**
(21) Numéro de dépôt: 05290997.5
(22) Date de dépôt: 10.05.2005
(51) Int. Cl.: F16L 7/02, F16L 49/08, F16L 27/053, F16L 23/16

(54) **Dispositif pour fixation étanche d'un tube pénétrant dans un réservoir**

(30) Priorité: 11.05.2004 FR 0405081
(71) Demandeur: Arkema, 92800 Puteaux (FR)
(72) Inventeur: Chabidon, René, 69230 Saint Genis Laval (FR); Vanney, François, 69006 Lyon (FR)
(74) Mandataire: Hirsch & Associés

(57) **Abrégé**

L'invention concerne un dispositif (30) pour fixation étanche d'un tube (1) pénétrant dans un réservoir. Une extrémité (10, 11) du tube (1) forme une liaison rotule (7, 8, 10, 11), en coopération avec une pièce (7, 8) en matériau souple, montée fixe par rapport au réservoir. Ledit dispositif (30) comprend : une entretoise (14), traversée par le tube (1) et prévue pour être montée solidaire du réservoir ; et au moins un joint torique (3, 4) d'étanchéité, contre le tube, le joint (3, 4) étant reçu dans une gorge ménagée dans l'entretoise (14) en regard du tube (1).

## Description

La présente invention concerne un nouveau dispositif pour fixation étanche d'un tube pénétrant dans un réservoir.

On connaît d'après EP-A-0 128 818 et US-A-4 689 130 des procédés industriels utilisant des réacteurs photochimiques.

On connaît également, d'après US-A-3 998 477, un dispositif de fixation d'un tube sur une tubulure d'une capacité, permettant une fixation étanche d'un tube en quartz tout en autorisant de légers mouvements du tube.

Lorsque de fortes turbulences se produisent dans une telle capacité ou si le tube utilisé présente une grande longueur, il peut se produire une rupture du tube (par exemple avec un tube en quartz) ou un pliage (par exemple avec un tube en acier). Les contraintes exercées sur le tube conduisent souvent à des déformations permanentes des joints à lèvres assurant l'étanchéité et des joints toriques en tête du tube à l'extérieur du réacteur.

EP-A-0 321 341, au nom de la demanderesse, divulgue un dispositif pour la fixation étanche d'un tube de section essentiellement circulaire traversant la paroi d'une capacité, dans lequel l'extrémité du tube à l'extérieur de la capacité forme, en liaison avec une pièce en matériau souple, une rotule et dans lequel l'étanchéité du passage du tube à travers la paroi de la capacité est assurée par au moins un joint à lèvres. Un tel dispositif permet de fixer de façon étanche un tube traversant la paroi d'une capacité et pouvant supporter les importantes contraintes mécaniques dues à un milieu liquide turbulent, et à l'effort résultant de la pression intérieure de la capacité sur la section du tube.

Cependant, les dispositifs de fixation de tube évoqués ci-dessus présentent des inconvénients. Les joints d'étanchéité utilisés ont une faible résistance chimique. Ainsi, l'utilisation de tels joints en milieu chimique agressif oblige à des interventions en maintenance fréquentes, voire à des situations dangereuses liées aux fuites, et donc à des arrêts de production très coûteux.

Il existe donc un besoin pour un dispositif d'assemblage d'un tube à un réservoir permettant de diminuer la fréquence d'interventions en maintenance.

A cette fin, l'invention propose un dispositif pour fixation étanche d'un tube pénétrant dans un réservoir, une extrémité du tube formant une liaison rotule en coopération avec une pièce en matériau souple, montée fixe par rapport au réservoir, ledit dispositif comprenant : une entretoise, traversée par le tube et prévue pour être montée solidaire du réservoir ; et au moins un joint torique d'étanchéité, contre le tube, le joint étant reçu dans une gorge ménagée dans l'entretoise en regard du tube.

Dans des modes de réalisation préférés, l'invention comprend une ou plusieurs des caractéristiques suivantes :
- le dispositif comprend deux joints toriques d'étanchéité, contre le tube, chacun des joints étant reçu dans une gorge ménagée dans l'entretoise en regard du tube ;
- l'entretoise est adaptée à être partiellement encastrée dans le col d'une tubulure d'accès du réservoir ;
- ledit au moins un joint torique est en un matériau élastomère perfluoré ;
- l'entretoise présente en outre un joint torique de sécurité contre le tube ;
- ladite extrémité du tube présente une forme bombée, en contact avec la pièce en matériau souple ; et
- le tube 1 comprend des émetteurs ultraviolets.

L'invention concerne en outre un réservoir comprenant un dispositif selon l'invention.

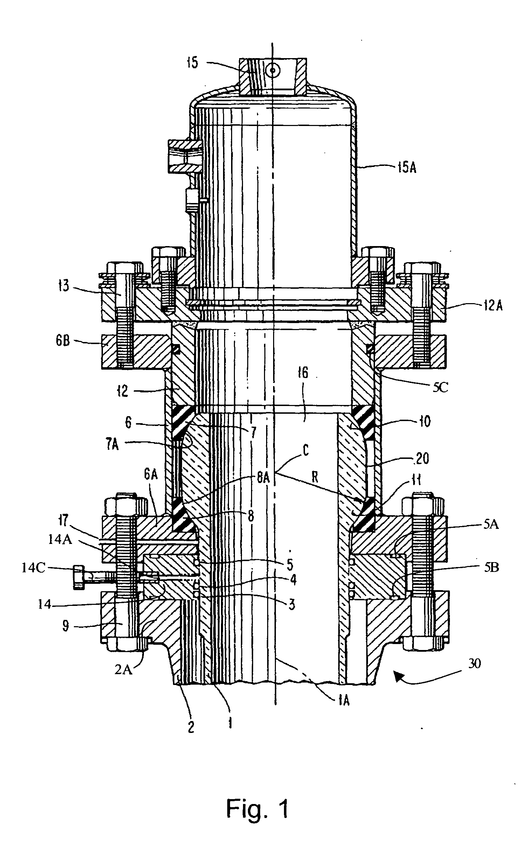

D'autres caractéristiques et avantages de l'invention apparaîtront à la lecture de la description détaillée qui suit des modes de réalisation de l'invention, donnés à titre d'exemple uniquement et en référence à la figure unique annexée représentant une section longitudinale d'un dispositif pour fixation étanche d'un tube pénétrant dans un réservoir selon un mode de réalisation de l'invention.

L'invention propose un dispositif pour fixation étanche d'un tube pénétrant dans un réservoir. Une extrémité du tube forme une liaison rotule, en coopération avec une pièce en matériau souple prévue pour être montée fixe par rapport au réservoir. Le dispositif comprend : une entretoise, traversée par le tube et prévue pour être montée solidaire du réservoir, et au moins un joint torique d'étanchéité, contre le tube, le joint étant reçu dans une gorge ménagée dans l'entretoise en regard du tube. Un tel joint torique est résistant, facile à fabriquer et peut être fabriqué en des matériaux très résistants chimiquement, par exemple des matériaux élastomères perfluorés. Il s'ensuit qu'un dispositif selon l'invention nécessite moins d'interventions de maintenance par rapport aux dispositifs de l'art antérieur. En outre, le dispositif selon l'invention améliore la sécurité en diminuant le risque de fuite.

La figure unique représente une section longitudinale d'un dispositif pour fixation étanche d'un tube pénétrant dans un réservoir selon un mode de réalisation de l'invention.

La figure montre notamment un tube 1 de section sensiblement circulaire, pénétrant dans un réservoir.

Ce tube 1 peut comprendre des matériaux quelconques, être fait d'un seul matériau, le cas échéant, et être de dimension quelconque. Le tube peut par exemple comprendre du verre, du quartz, du graphite, des matériaux élastomères perfluorés ou dérivés de polymères tels que le polytétrafluoréthylène, le polypropylène, le polychlorure de vinyle ou encore des matériaux obtenus à partir de métaux ou d'alliages tels que de l'acier, de l'acier plaqué, de l'acier inoxydable, du nickel, du cuivre ou du monel. Le tube peut en outre être plein ou creux.

Le tube est, le cas échéant, monté à rotation autour d'un point C fixe par rapport au réservoir. Ce point C fixe est, de préférence, à l'extérieur du réservoir, comme dans le mode de réalisation illustré sur la figure. Ce point C est en outre situé sur l'axe longitudinal 1A du tube 1. A cet effet, le dispositif 30 peut par exemple comprendre un mécanisme d'articulation, réalisé par l'ensemble des éléments 7, 8, 10, 11 dans le mode de réalisation représenté sur la figure ou par le seul ensemble d'éléments 8, 11 selon une variante. Ce mécanisme permet d'articuler le tube 1 au niveau du point C, sensiblement au niveau d'une extrémité 10, 11 du tube.

Le réservoir, qui se trouve au bas de la figure dans le mode de réalisation illustré, peut par exemple présenter une tubulure 2 d'accès. Une tubulure 2 permet par exemple d'offrir un accès calibré à l'intérieur du réservoir. Sous la tubulure 2, une partie du tube 1 pénètre dans le réservoir, tandis que l'extrémité 10, 11 du tube est, de préférence, hors de la tubulure 2.

Le réservoir peut être par exemple utilisé pour un réacteur chimique, une colonne de distillation. Il peut en outre contenir un fluide sous pression ou sous vide. L'articulation 7, 8, 10, 11 autorise de légers mouvements du tube, comme il est connu de l'art. Elle permet une légère rotation du tube afin d'absorber des vibrations, par exemple des vibrations occasionnées par des turbulences dues par exemple à un fluide dans le réservoir.

Le dispositif 30 comprend une entretoise 14. Cette entretoise peut être disposée sensiblement entre le point C fixe et la tubulure 2, selon l'axe longitudinal 1A du tube 1. L'entretoise est solidaire du réservoir, le cas échéant via une pièce intermédiaire. Elle peut être solidarisée au réservoir de différentes façons, un exemple de solidarisation sera décrit plus loin. Cette entretoise 14 présente une ouverture, par exemple circulaire, pour le passage du tube 1 (elle peut à cet effet se présenter sous la forme d'un tronçon de cylindre creux ou d'une rondelle). En outre, l'entretoise peut éventuellement présenter plusieurs parties (telles que des mors) qu'il est possible de solidariser. L'entretoise peut par exemple avantageusement se présenter sous la forme d'un mandrin à mors à serrage concentrique, c'est-à-dire un mandrin de serrage dans lequel les mors se déplacent simultanément par rapport à une pièce devant être bloquée et ce, tout en conservant un centre commun. L'entretoise peut encore avantageusement se présenter par exemple sous la forme d'un mandrin à combinaison, c'est-à-dire un mandrin dont les mors peuvent être serrés simultanément ou séparément. Elle peut également se présenter sous la forme de deux demi-tronçons de cylindre qu'il est possible de rapprocher afin d'ajuster le diamètre de l'ouverture au diamètre extérieur du tube 1. Le fait que l'entretoise présente plusieurs parties permet de faciliter un démontage et, le cas échéant, le changement d'un joint au niveau de l'entretoise. Afin de faciliter la mise en place du tube 1 dans l'entretoise 14, il convient de prévoir un diamètre d'ouverture légèrement supérieur au diamètre extérieur du tube.

Dans un mode de réalisation, le dispositif comprend un joint torique 3, 4 d'étanchéité. Le joint 3, 4 est appliqué contre le tube 1 et est reçu dans une gorge ménagée dans l'entretoise 14 en regard du tube 1.

Ce joint permet d'obtenir une étanchéité du dispositif, selon la direction verticale, entre l'entretoise 14 et le tube 1.

De préférence, la plus grande partie du joint torique (par exemple 95 %) vu, par exemple, de section est reçue dans la gorge. Le joint est alors « caréné ». Seule une partie mineure du joint est hors de la gorge. La protection offerte par la gorge prévient ainsi au moins en partie la détérioration (par exemple des déformations, déchirures) du joint due par exemple à la présence de fluides dans le réservoir. Pour autant, le fait que le joint soit reçu dans la gorge n'empêche pas forcément le phénomène de gonflement du joint. Un tel phénomène peut contribuer à améliorer l'étanchéité car le gonflement du joint accentue la pression du joint contre le tube. Au contraire, l'utilisation de joints de forme peu symétrique, tels par exemple des joints à lèvres, ne permet pas à ces joints d'être reçus pour leur plus grande partie dans une gorge. Des joints de forme peu symétrique et peu ou pas carénés sont donc exposés et sont notamment sensibles aux fluides contenus dans le réservoir. De tels joints sont sujets à un gonflement non contenu (du fait de l'absence de gorge). Ce gonflement risque alors de conduire à une détérioration du joint. Un joint torique est du reste plus facile à fabriquer et peut être fabriqué en des matériaux performants, très résistants chimiquement, par exemple des matériaux élastomères perfluorés et avec peu de rebus. Il s'ensuit qu'un dispositif selon l'invention nécessite moins d'interventions de maintenance par rapport aux dispositifs de l'art antérieur. La sécurité est en outre améliorée, comparativement aux dispositifs de l'art antérieur, en ce qui concerne notamment le risque de fuites. En outre, la réalisation d'un joint torique nécessite moins de matière.

De préférence, le dispositif comprend deux joints toriques 3, 4 d'étanchéité au niveau de la surface interne de l'entretoise 14, c'est-à-dire la surface en regard du tube 1. Chacun des joints 3, 4 est reçu dans une gorge ménagée dans l'entretoise 14 en regard du tube 1. Une partie des joints 3, 4 est en (légère) saillie à l'extérieur de la gorge dans laquelle il est reçu et en appui contre le tube 1. Les plans moyens associés à chacun des joints 3, 4 ou à chacune des gorges associées sont de préférence sensiblement parallèles et, de plus, sensiblement perpendiculaires à l'axe longitudinal 1A du tube au repos. La distance entre ces plans moyens pourra par exemple être choisie aussi petite que possible, pour ne pas s'opposer aux mouvements du tube. En pratique, la distance est typiquement de l'ordre du centimètre.

Les deux joints toriques 3, 4 permettent d'obtenir une étanchéité du dispositif, verticalement entre l'entretoise 14 et le tube 1. De façon surprenante, il s'est avéré que l'utilisation de deux joints toriques offrait une étanchéité beaucoup plus fiable qu'avec un seul joint torique. En particulier, la durée de fonctionnement (ou longévité) du dispositif selon l'invention avec deux joints toriques d'étanchéité, entre deux interventions en changement de joint, est largement supérieure à celle obtenue avec un seul joint. En réalité, la longévité avec deux joints toriques d'étanchéité est largement supérieure au double de celle obtenue avec un seul joint. L'efficacité de l'étanchéité obtenue est donc non linéaire. Un dispositif selon l'invention nécessite ainsi moins d'interventions en maintenance (par exemple pour changer un ou des joints détériorés) par rapport aux dispositifs de l'art antérieur.

En outre, étant donné que les joints toriques 3, 4 sont reçus dans des gorges, ils sont partiellement carénés et, de ce fait, protégés. Ils sont donc moins sujets aux détériorations que connaissent les joints à lèvres habituellement utilisés dans les dispositifs d'assemblage de tube avec un réservoir de l'art antérieur. Il s'ensuit que la résistance et par suite la durée de vie des joints sont améliorés.

Dans un mode de réalisation, la tubulure 2 d'accès présente un col 2A de tubulure, surmontant la tubulure 2, comme représenté sur la figure (plus précisément vers le bas de la figure). L'entretoise 14 se situe sensiblement entre l'articulation 7, 8, 10, 11 et le col 2A de tubulure, selon l'axe longitudinal 1A du tube. La tubulure 2 et, en particulier, le col 2A de tubulure permettent de raccorder le tube 1 au réservoir.

En outre, il est possible de prévoir un encastrement partiel de l'entretoise 14 dans le col 2A de tubulure. Une étanchéité entre l'entretoise 14 et le col 2A de tubulure peut en outre être assurée par un joint torique 5B. Un tel joint peut, le cas échéant, être logé dans une gorge sensiblement circulaire, en regard avec le col 2A de tubulure.

L'encastrement partiel de l'entretoise 14 dans le col 2A de tubulure permet en outre d'améliorer à la fois la mise en place de l'entretoise, le positionnement et le maintien du tube selon l'axe 1A.

Dans un mode de réalisation, au moins l'un des joints toriques 3, 4 (et éventuellement les joints toriques 5A, 5B, 5C) est dans un matériau élastomère perfluoré, c'est-à-dire un élastomère dont les atomes d'hydrogène ont été remplacés par des atomes de fluor.

Ce type de matériau permet la fabrication de joints étanches particulièrement performants. Or, compte tenu de leurs formes complexes, les joints à lèvres ne sont pas disponibles, voire impossible à fabriquer en un matériau élastomère perfluoré. En revanche, les joints toriques se prêtent particulièrement bien à l'utilisation de ce type de matériau, nécessitant en outre peu de matière en comparaison.

Dans un mode de réalisation, les joints 3, 4 sont fabriqués en polytétrafluoroéthylène (PTFE), lequel offre une excellente résistance aux substances chimiques, une bonne stabilité thermique et un faible coefficient de friction.

Il est également possible d'utiliser un autre matériau perfluoré, tel que le Kalrez.

On pourra, le cas échéant, fabriquer les joints toriques 3, 4 à partir d'un élastomère perfluoré associant les propriétés élastiques d'un élastomère fluoré et la résistance chimique et thermique du PTFE, afin de pouvoir être utilisé en continu jusqu'à des températures dépassant 300°C.

Il est également envisageable d'utiliser des joints en un élastomère fluoré tel que le viton.

Dans d'autres modes de réalisation, on pourra combiner des joints (par exemple 3, 4, 5, 5A, 5B, 5C, 7 et 8) faits de matériaux différents parmi ceux précités, afin d'optimiser le rapport qualité / prix de l'ensemble de joints.

Dans un mode de réalisation, l'entretoise 14 présente en outre un troisième joint torique 5, logé dans une gorge prévue dans l'entretoise et en appui contre le tube 1. Ce joint 5 est un joint de sécurité, permettant de contenir au moins provisoirement une fuite en cas de défaillance des joints 3, 4. L'entretoise présente également une ouverture 14A dans la surface de l'entretoise 14 en regard du tube 1, entre le joint 5 et les joints 3, 4. Le troisième joint 5 est donc d'un côté opposé aux deux joints toriques 3, 4 d'étanchéité par rapport à plan au niveau duquel est l'ouverture 14A. Cette ouverture 14A donne sur un conduit qu'il est possible d'obturer par une vis 14C. Ce conduit peut être relié à un dispositif adapté à détecter une fuite (par exemple une alarme de pression), afin de prévenir une éventuelle fuite due par exemple à un défaut d'étanchéité des deux joints toriques 3, 4.

La vis 14C peut être une tubulure de connexion, comme il est connu de l'art.

L'extrémité 10, 11 à laquelle est articulé le tube 1 peut en outre présenter une forme bombée, à l'instar du mode de réalisation représenté sur la figure. Cette extrémité est en contact avec au moins un joint 8, de préférence deux joints 7, 8, en matériau souple avec lequel l'extrémité 10, 11 forme une articulation 7, 8, 10, 11 (plus particulièrement ici une liaison rotule). Comme matériau souple on utilise les matériaux habituels pour les joints, à savoir les caoutchoucs naturels ou de synthèse, des polymères fluorés, chlorofluorés, des copolymères éthylène propylène, etc.. Cette liaison rotule permet de légères rotations du tube autour du point fixe C, sensiblement au centre de la forme bombée 10, 11, pour absorber les vibrations et permettre le maintien du tube 1 en s'opposant à l'effet de fond sur la section du tube.

Dans un mode de réalisation, le tube 1 comprend des émetteurs ultraviolets (ou lampes d'émission UV) pour être utilisé dans un réacteur photochimique, par exemple un réacteur de chloration radicalaire fonctionnant le cas échéant sous pression. Son diamètre est alors typiquement compris entre 30 et 300 mm et sa longueur entre 1 et 6 m. Le tube peut être en quartz ou en verre et être creux afin de pouvoir y disposer des lampes d'émission UV et, si nécessaire, un dispositif de refroidissement.

Dans le mode de réalisation représenté sur la figure, la pièce 6 est une pièce soudée (ou mécanosoudée) aux plateaux (ou brides) 6A et 6B et qui est solidarisée à la tubulure 2 du réservoir (via le col 2A de tubulure) par des boulons 9. Les éléments 2A et 6A enserrent l'entretoise 14 qui, de ce fait, se trouve solidarisée au réservoir. Les secteurs sphériques 10 et 11 confère à l'extrémité du tube sa forme bombée. L'extrémité présente une section cylindrique 20 entre les secteurs sphériques 10 et 11. L'extrémité bombée du tube peut être inscrite dans une sphère dont le rayon R s'étend depuis le point C résidant sensiblement sur l'axe longitudinal 1A du tube. Le tube présente en outre une ouverture 16 pour y introduire les émetteurs UV et leur dispositif de refroidissement, le cas échéant. La pièce 12, soudée au plateau 12A, permet de régler et de serrer les joints 7 et 8, à l'aide des boulons 13, qui relient les plateaux (ou brides) 12A et 6B. L'orifice 15 permet l'alimentation électrique de la lampe UV qui est dans le tube 1. Par soucis de clarté, on n'a pas représenté sur la figure le système de bouchage de l'orifice 15 qui permet d'éviter de vider le contenu de la capacité en cas de rupture du tube 1. Les surfaces respectives 7A et 8A des joints 7 et 8 se conforment aux secteurs sphériques 10,11 de l'extrémité du tube 1. Les joints 7 et 8 permettent de maintenir le tube 1, en résistant à l'effet de fond du à la pression à l'intérieur de la capacité sur la section du tube, comme discuté plus haut. Ces joints 7 et 8 permettent une légère rotation du tube autour du centre C. Cette rotation est limitée, notamment par les joints toriques 3 et 4. Bien que la rotation soit limitée (l'angle de déviation maximale par rapport à l'axe 1A est typiquement de l'ordre d'une fraction de radian), elle est suffisante pour éviter les ruptures dues aux turbulences du milieu liquide à l'intérieur de la capacité. Le plateau 6A comprend un conduit 17 débouchant sur une ouverture en regard du tube 1, permettant une détection additionnelle de fuite, en aval du joint torique 5.

L'invention n'est cependant pas limitée aux variantes décrites ci-avant mais est susceptible de nombreuses autres variations aisément accessibles à l'homme du métier. Par exemple, l'invention s'étend à un réservoir et par extension tout récipient comprenant un dispositif selon l'invention.

## Revendications

1. Dispositif (30) pour fixation étanche d'un tube (1) pénétrant dans un réservoir, une extrémité (10, 11) du tube (1) formant une liaison rotule (7, 8, 10, 11), en coopération avec une pièce (7, 8) en matériau souple, montée fixe par rapport au réservoir, ledit dispositif (30) comprenant :
- une entretoise (14), traversée par le tube (1) et prévue pour être montée solidaire du réservoir ; et
- au moins un joint torique (3, 4) d'étanchéité, contre le tube, le joint (3, 4) étant reçu dans une gorge ménagée dans l'entretoise (14) en regard du tube (1).

2. Dispositif (30) selon la revendication 1, **caractérisé en ce que** le dispositif (30) comprend deux joints toriques (3, 4) d'étanchéité, contre le tube, chacun des joints (3, 4) étant reçu dans une gorge ménagée dans l'entretoise (14) en regard du tube (1).

3. Dispositif (30) selon la revendication 2, **caractérisé en ce que** l'entretoise (14) est adaptée à être partiellement encastrée dans le col (2A) d'une tubulure (2) d'accès du réservoir.

4. Dispositif (30) selon l'une quelconque des revendications 1 à 3, **caractérisé en ce que** ledit au moins un joint torique (3, 4) est en un matériau élastomère perfluoré.

5. Dispositif (30) selon l'une quelconque des revendications 1 à 4, **caractérisé en ce que** l'entretoise (14) présente en outre un joint torique (5) de sécurité contre le tube (1).

6. Dispositif (30) selon l'une quelconque des revendications 1 à 5, **caractérisé en ce que** ladite extrémité (10, 11) du tube (1) présente une forme bombée, en contact avec la pièce (7, 8) en matériau souple.

7. Dispositif (30) selon l'une quelconque des revendications 1 à 6, **caractérisé en ce que** le tube (1) comprend des émetteurs ultraviolets.

8. Réservoir comprenant un dispositif (30) selon l'une quelconque des revendications 1 à 7.
